# DEMANDE DE BREVET EUROPEEN

(11) **EP 4 650 837 A1**
(43) Date de publication de la demande: **19.11.2025**
(21) Numéro de dépôt: 25176165.6
(22) Date de dépôt: 13.05.2025
(51) Int. Cl.: G02B 6/38, G02B 6/46, H02G 3/12, H02G 3/16, H02G 3/18

(54) **DISPOSITIF ENCASTRABLE DE CONNEXION OPTIQUE ET PROCÉDÉ DE MONTAGE D'UN TEL DISPOSITIF DANS UN BLOC ENCASTRÉ DANS UN MUR**

(30) Priorité: 14.05.2024 FR 2404914
(71) Demandeur: ACOME, 75014 Paris (FR)
(72) Inventeur: MARTIN, Olivier, 50140 Mortain-Bocage (FR)
(74) Mandataire: Regimbeau

(57) **Abrégé**

La présente invention concerne un dispositif (1) encastrable de connexion optique comprenant une platine (5) propre à être fixée sur un bloc encastré (3) dans un mur, un boîtier de lovage (7), et une traversée optique (9), la platine (5) étant propre à être successivement fixée sur le bloc encastré (3) dans une première configuration de fixation puis dans une deuxième configuration de fixation dans laquelle la platine (5) est retournée par rapport à la première configuration de fixation, la platine (5) comportant au moins une encoche périphérique (33) propre à être traversée par un câble optique (27) dans la première configuration de fixation, et dans la deuxième configuration de fixation, l'encoche périphérique (33) étant libre de câble optique (27).

L'invention concerne également un procédé de montage d'un tel dispositif (1) sur un bloc encastré (3) dans un mur.

## Description

### DOMAINE DE L'INVENTION

La présente invention se rapporte à un dispositif encastrable de connexion optique, ainsi qu'à un procédé de montage d'un tel dispositif encastrable de connexion optique dans un bloc encastré dans un mur.

Cette invention trouve préférentiellement une application dans le domaine des réseaux de télécommunication connus sous le sigle FTTH pour Fiber To The Home en anglais, lequel peut être traduit par fibre optique jusqu'à l'abonné.

La solution selon l'invention trouve en particulier une application au niveau d'un PTO, sigle de prise terminale optique ou de point de terminaison optique, et se rapporte plus particulièrement au mode de fixation des câbles optiques à l'intérieur de ces boîtiers.

### ETAT DE LA TECHNIQUE

Il est connu des dispositifs encastrables de connexion optique. De tels dispositifs servent à relier optiquement un câble optique débouchant depuis un mur dans un bloc encastré à une prise optique extérieure pour le branchement d'une fiche optique extérieure d'un équipement, tel qu'un modem comprenant un convertisseur optique/électrique, également appelé ONT, sigle de Optical Network Termination en anglais, lequel peut être traduit par terminaison de réseau optique.

Toutefois, avec les dispositifs encastrables de connexion optique actuels, l'assemblage et le montage sont difficiles pour l'utilisateur devant réaliser la connexion optique depuis le câble optique et monter le dispositif encastrable de connexion optique sur le bloc encastré. Ainsi par exemple, lors de l'épissurage d'une fibre optique de câble du câble optique avec une fibre optique de fiche couplée à la prise optique extérieure, l'utilisateur doit constamment s'assurer que le rayon de courbure du câble optique n'est pas trop faible, ce qui pourrait détériorer la ou les fibres optiques de câble du câble optique. Par ailleurs, l'espace de travail pour l'utilisateur est souvent exigu et inconfortable, ce qui augmente encore la difficulté d'assemblage et de montage pour l'utilisateur.

De plus, une fois l'épissurage réalisé, l'utilisateur doit constamment s'assurer que le rayon de courbure du câble optique n'est pas trop faible également lors de l'étape de lovage des fibres optiques de câble et/ou des fibres optiques de fiche.

Ainsi, le montage d'un tel dispositif encastrable de connexion optique est difficile, et lors du montage, le risque de détérioration de fibre optique, en particulier de rupture, soit d'une fibre optique de câble du câble optique, soit d'une fibre optique de fiche du dispositif encastrable de connexion optique, est trop important.

### EXPOSE DE L'INVENTION

La présente invention vise à pallier tout ou partie des inconvénients cités ci-dessus.

L'invention a notamment pour but de fournir un dispositif encastrable de connexion optique dont le montage est optimisé tout en limitant le risque de détérioration des fibres optiques.

Selon un premier aspect, l'invention propose un dispositif encastrable de connexion optique comprenant :
- une platine propre à être fixée sur un bloc encastré dans un mur,
- un boîtier de lovage, le boîtier de lovage étant fixé à la platine et propre à recevoir au moins une fibre optique lovée, et
- une traversée optique traversant la platine et de laquelle est propre à s'étendre au moins une fibre optique de fiche propre à être couplée par une épissure avec une fibre optique de câble d'un câble optique issu du bloc encastré et à être lovée dans le boîtier de lovage, caractérisé en ce que :
   la platine est propre à être successivement fixée sur le bloc encastré dans une première configuration de fixation puis dans une deuxième configuration de fixation dans laquelle la platine est retournée par rapport à la première configuration de fixation, la platine comportant au moins une encoche périphérique propre à être traversée par le câble optique, de telle sorte que :
   - dans la première configuration de fixation, le boîtier de lovage est opposé au bloc encastré par rapport à la platine et une encoche périphérique est traversée par le câble optique, et
   - dans la deuxième configuration de fixation, le boîtier de lovage est logé dans le bloc encastré et l'encoche périphérique est libre de câble optique.

Ainsi, le montage du dispositif encastrable de connexion optique est optimisé tout en limitant le risque de détérioration des fibres optiques. En effet, l'utilisation d'une première configuration de fixation de la platine dans laquelle le boîtier de lovage est accessible, permet de réaliser de manière simple et sûre des étapes d'assemblage, comme par exemple l'épissurage d'une fibre optique de câble avec une fibre optique de fiche, tout en permettant une fixation finale du dispositif encastrable de connexion optique dans la deuxième configuration de fixation de la platine, et ce de manière particulièrement simple, par retournement de la platine. Un retournement étant un déplacement simple, le risque d'une mauvaise manipulation de la platine par un utilisateur entraînant une détérioration du câble optique ou plus généralement d'une fibre optique est ainsi particulièrement limité lors du transfert de la première configuration de fixation à la deuxième configuration de fixation.

Une fiche optique de laquelle s'étend une fibre optique de fiche est également connue par le terme anglais « pigtail ».

Le dispositif encastrable de connexion optique est avantageusement et optionnellement complété par les caractéristiques suivantes, prises seules ou en une quelconque de leurs combinaisons techniquement possibles :
- La traversée optique est propre à être logée dans le bloc encastré.
- Dans la première configuration de fixation, la traversée optique est logée dans le bloc encastré.
- Le boîtier de lovage est propre à recevoir une ou plusieurs fibres optiques lovées en son sein.
- La platine est propre à être successivement fixée directement sur le bloc encastré dans la première configuration de fixation puis dans la deuxième configuration de fixation.
- La platine est propre à être successivement fixée dans la première configuration de fixation, sur un manchon intermédiaire lui-même fixé sur le bloc encastré, puis dans la deuxième configuration de fixation, directement sur le bloc encastré.
- Le boîtier de lovage comprend un évidement propre à recevoir au moins une fibre optique lovée, de préférence propre à recevoir une pluralité de fibres optiques lovées. Ainsi, le lovage est facilité.
- Le câble optique comprend au moins une fibre optique de câble, de préférence au moins deux fibres optiques de câble, plus préférentiellement exactement quatre fibres optiques de câble.
- La traversée optique comporte au moins une connexion optique, chaque connexion optique étant formée, à une première extrémité opposée au boîtier de lovage, par une prise optique extérieure pour le branchement d'une fiche optique extérieure d'un équipement, et, à une deuxième extrémité du côté du boîtier du lovage, par un raccord interne couplé à une fiche optique de laquelle s'étend une fibre optique de fiche. Ainsi, l'assemblage du dispositif encastrable de connexion optique est simplifié.
- Le dispositif encastrable de connexion optique comporte un système d'arrimage, le système d'arrimage comportant un dispositif de serrage, le dispositif de serrage étant propre à maintenir le câble optique sur le boîtier de lovage à la fois dans la première configuration de fixation et dans la deuxième configuration de fixation. Ainsi, dans la première configuration de fixation, le système d'arrimage est configuré pour orienter l'extrémité du câble optique faisant saillie hors d'une encoche périphérique vers le boîtier de lovage et ce, de telle sorte que la partie du câble optique faisant saillie hors de l'encoche périphérique présente un rayon de courbure supérieur à un seuil prédéterminé et ce, jusqu'au dispositif de serrage.
- Le système d'arrimage est formé par une surface d'appui du boîtier de lovage et le dispositif de serrage, le dispositif de serrage étant propre à maintenir le câble optique contre la surface d'appui à la fois dans la première configuration de fixation et dans la deuxième configuration de fixation. Ainsi, dans la première configuration de fixation, le système d'arrimage est configuré pour orienter l'extrémité du câble optique faisant saillie hors d'une encoche périphérique vers le boîtier de lovage et ce, de telle sorte que la partie du câble optique faisant saillie hors de l'encoche périphérique présente un rayon de courbure supérieur à un seuil prédéterminé et ce, jusqu'au dispositif de serrage.
- La surface d'appui est une surface d'un ergot du boîtier de lovage, de préférence l'ergot étant formé par le prolongement d'une paroi périphérique délimitant l'évidement du boîtier de lovage. Ainsi, la surface d'appui est réalisée de manière simple, tout en facilitant pour l'utilisateur le montage et le maintien du câble optique sur le boîtier de lovage par le dispositif de serrage.
- La surface d'appui est plane. Ainsi, on garantit géométriquement que le câble optique n'est pas courbé de manière trop importante, en particulier au-dessous de son rayon de courbure minimal admissible.
- Le système d'arrimage est distant de la platine d'une distance minimale prédéterminée. Ainsi, on garantit que le câble optique ne peut être courbé de manière trop importante.
- La platine comporte des trous de fixation propres à la fixation de la platine sur le bloc encastré au moyen de vis de fixation, chaque trou de fixation comprenant :
- une portion de passage propre au passage de la tête d'une vis de fixation à travers la portion de passage, et
- une portion de fixation propre à la fixation de la platine par serrage entre la vis de fixation et le bloc encastré.

Ainsi, le passage d'une fixation dans la première configuration de fixation à une fixation dans la deuxième configuration de fixation est réalisé de manière particulièrement simple et efficace. Il n'est en particulier pas nécessaire de dévisser complètement les vis de fixation. En effet, il suffit simplement de dévisser légèrement les vis de fixation, de pivoter légèrement la platine de sorte que les vis de fixation soient alignées avec les portions de passage, de dégager la platine en passant les vis de fixation à travers les portions de passage, de retourner la platine, de réengager les vis de fixation à travers les portions de passage, de pivoter légèrement la platine de sorte que les vis de fixation soient alignées avec les portions de fixation, puis de revisser les vis de fixation.
- Le dispositif encastrable de connexion optique comporte un dispositif de retenue propre à la fixation d'au moins une mèche de renfort du câble optique au boîtier de lovage. Ainsi, on améliore davantage la sécurité de montage, d'éventuels efforts appliqués au câble optique étant transmis au boîtier de lovage par l'intermédiaire d'au moins une mèche de renfort, lequel est justement adapté à résister aux efforts.
- Le boîtier de lovage comporte au moins une fourchette propre à recevoir au moins une épissure. Ainsi, on améliore davantage la sécurité de montage en protégeant le résultat de l'étape d'épissurage réalisée par l'utilisateur, à savoir au moins une épissure.
- Le boîtier de lovage comporte au moins un logement propre à recevoir au moins une épissure. Ainsi, on améliore la sécurité de montage en protégeant le résultat de l'étape d'épissurage réalisée par l'utilisateur, à savoir au moins une épissure.
- La ou chaque épissure est logée dans un logement. Ainsi, chaque épissure est protégée contre les détériorations pouvant survenir lors du lovage des fibres optiques.
- Le ou chaque logement est formé entre deux parois parallèles du boîtier de lovage. Ainsi, chaque logement est réalisé de manière simple.
- Le ou chaque logement est formé par au moins une fourchette propre à recevoir au moins une épissure. Ainsi, chaque logement est réalisé de manière particulièrement simple, et on améliore davantage la sécurité de montage en protégeant le résultat de l'étape d'épissurage réalisée par l'utilisateur, à savoir au moins une épissure.
- Le ou chaque logement est formé par deux fourchettes délimitant entre elles un passage configuré pour permettre l'extraction d'au moins une épissure par un outil. Ainsi, la maintenance par un utilisateur, lequel peut facilement extraire une épissure par un outil, est facilitée.
- Le boîtier de lovage comporte une pluralité de fourchettes, de préférence exactement deux fourchettes.
- Chaque fourchette est propre à recevoir une pluralité d'épissures. Ainsi, on limite le nombre de fourchettes tout en garantissant l'intégrité de chaque épissure.
- La distance minimale prédéterminée est supérieure au rayon de courbure minimal admissible du câble optique. Ainsi, une telle distance minimale prédéterminée est optimale en ce qu'elle évite la détérioration du câble optique lors de l'assemblage.
- La distance minimale prédéterminée est comprise entre 15 millimètres et 30 millimètres, de préférence égale à 19 millimètres. Ainsi, une telle distance minimale prédéterminée est optimale en ce qu'elle évite la détérioration du câble optique lors de l'assemblage tout en permettant au dispositif encastrable de connexion optique d'être fixé à un bloc encastré standard.
- La surface d'appui est distante d'un axe central de la platine d'une distance radiale minimale prédéterminée. Ainsi, on garantit que le câble optique et que chaque fibre optique de câble ne peut être détérioré lors de l'assemblage.
- La distance radiale minimale prédéterminée est supérieure au rayon de courbure minimal admissible du câble optique. Ainsi, on garantit que le câble optique ne peut être détérioré lors de l'assemblage.
- La distance radiale minimale prédéterminée est comprise entre 15 millimètres et 35 millimètres, de préférence comprise entre 20 millimètres et 30 millimètres, plus préférentiellement égale à 24 millimètres. Ainsi, une telle distance radiale minimale prédéterminée est optimale en ce qu'elle évite la détérioration du câble optique lors de l'assemblage tout en permettant au dispositif encastrable de connexion optique d'être fixé à un bloc encastré standard.
- Le boîtier de lovage est encliqueté sur la platine. Ainsi, l'assemblage du dispositif encastrable de connexion optique est simplifié.
- Le boîtier de lovage est monolithique. Ainsi, l'assemblage du dispositif encastrable de connexion optique est simplifié.
- La platine comporte une ouverture à travers laquelle s'étend la traversée optique. Ainsi, la fabrication de la platine est simplifiée tout en permettant de maintenir simplement la traversée optique par rapport à la platine.
- La platine, le boîtier de lovage et la traversée optique sont fixes les uns par rapport aux autres.
- Dans la deuxième configuration de fixation, chaque encoche périphérique est exempte de câble optique.
- Dans la première configuration de fixation, le boîtier de lovage fait saillie hors du bloc encastré.
- La platine est une plaque de support.
- Le mur est une maçonnerie pleine ou une cloison. Ainsi, par « mur », il faut notamment comprendre un mur plein dans lequel passe une gaine contenant le câble optique, ou une cloison murale dans laquelle passe le câble optique, de préférence entouré par une gaine.
- Le câble optique débouche dans le bloc encastré depuis une gaine disposée dans le mur.
- Le bloc encastré comprend un trou de passage à travers lequel s'étend le câble optique. Ainsi, le passage du câble optique à travers le bloc encastré est facilité.
- Chaque fibre optique est à base de verre.
- Chaque fibre optique de fiche est reliée avec une fibre optique de câble par une épissure, l'épissure étant mécanique ou soudée par fusion.
- La traversée optique comprend au moins deux connexions optiques, de préférence exactement quatre connexions optiques.
- La platine comporte une pluralité d'encoches périphériques régulièrement réparties sur la périphérie de la platine, de préférence exactement quatre encoches périphériques réparties tous les 90 degrés autour de l'axe central de la platine. Ainsi, le montage est facilité, du fait que le passage du câble optique dans la première configuration de fixation s'effectue à travers l'une des encoches périphériques, laquelle peut par exemple être choisie en fonction de la distance du câble optique par rapport à l'encoche périphérique, et/ou en fonction de la déformation minimale du câble optique passant à travers l'encoche périphérique sélectionnée.
- Le dispositif de serrage est un collier de serrage. Ainsi, le dispositif de serrage est réalisé de manière simple et peu coûteuse.
- La platine est métallique. Ainsi, la platine peut être d'épaisseur limitée tout en présentant une résistance importante à l'endommagement. Par ailleurs, la fabrication de la platine est simplifiée tout en limitant son coût. Alternativement, la platine est à base de matériau plastique, de préférence constituée de matériau plastique. Ainsi, la fabrication de la platine est simplifiée tout en limitant son coût.
- Le boîtier de lovage est à base de matériau plastique. Ainsi, la fabrication du boîtier de lovage est simplifiée tout en limitant son coût.
- Chaque trou de fixation est un trou oblong dont une extrémité formant la portion de passage présente un diamètre de passage plus important que celui de l'autre extrémité comprise dans la portion de fixation.
- Chaque trou de fixation s'étend autour de l'axe central de la platine.
- Les trous de fixation sont régulièrement répartis autour de l'axe central de la platine, de préférence tous les 90 degrés autour de l'axe central de la platine. Ainsi, la fixation est réalisée de manière simple.
- La platine comporte exactement quatre trous de fixation répartis tous les 90 degrés autour de l'axe central de la platine. Ainsi, la fixation est réalisée de manière particulièrement simple.
- Le dispositif de retenue est une vis de retenue. Ainsi, le dispositif de retenue est réalisé de manière simple.
- La vis de retenue est vissée dans un trou du boîtier de lovage. Ainsi, la retenue de la mèche de renfort est simple à réaliser pour un utilisateur.
- La ou chaque mèche de renfort est à base de poly(p-phénylènetéréphtalamide), également connu en tant que PPD-T ou Kevlar (marque déposée). Ainsi, on dispose d'une mèche de renfort solide et peu coûteuse.
- Le dispositif encastrable de connexion optique comprend un dispositif d'enjolivement. Ainsi, l'aspect extérieur du dispositif encastrable de connexion optique à l'état final de montage, c'est-à-dire dans la deuxième configuration de fixation de la platine, est amélioré.
- Le dispositif d'enjolivement est formé par un cadre d'enjolivement et une plaque d'enjolivement, laquelle comporte une ouverture à travers laquelle s'étend la traversée optique. Ainsi, l'aspect extérieur est encore amélioré.
- La plaque d'enjolivement est fixée à la platine, de préférence par une vis de fixation engagée dans la platine à travers un trou de la plaque d'enjolivement. Ainsi, la plaque d'enjolivement est fixée de manière simple.
- Le cadre d'enjolivement est propre à être maintenu par serrage entre la plaque d'enjolivement et le mur. Ainsi, l'aspect extérieur est encore amélioré.
- La platine comporte exactement une encoche périphérique. Ainsi, la fabrication de la platine est simplifiée.
- La surface d'appui est orientée vers une encoche périphérique.
- Le dispositif encastrable de connexion optique comporte deux systèmes d'arrimage, lesquels sont de préférence disposés de part et d'autre du boîtier de lovage, plus préférentiellement disposés symétriquement de part et d'autre du boîtier de lovage. Ainsi, l'installation est facilitée, du fait qu'une telle disposition permet à l'installateur de choisir le côté de passage du câble optique à travers une encoche périphérique, du côté droit ou du côté gauche de la platine, tout en facilitant l'arrimage du câble optique du même côté, dans la première configuration de fixation.

Selon un deuxième aspect, l'invention propose également un procédé de montage d'un dispositif encastrable de connexion optique tel que précédemment décrit dans un bloc encastré dans un mur, comprenant les étapes suivantes :
- placer la platine de telle sorte que le boîtier de lovage soit opposé au bloc encastré et placer le câble optique dans une encoche périphérique,
- fixer la platine dans la première configuration de fixation, directement sur le bloc encastré ou sur un manchon intermédiaire lui-même fixé sur le bloc encastré,
- épissurer chaque fibre optique de fiche avec une fibre optique de câble pour former une épissure,
- loger chaque épissure dans le boîtier de lovage,
- lover chaque fibre optique de fiche et chaque fibre optique de câble dans le boîtier de lovage,
- démonter la platine depuis la première configuration de fixation, retirer le câble optique de l'encoche périphérique, retourner la platine, lover le câble optique dans le bloc encastré, et fixer la platine sur le bloc encastré dans la deuxième configuration de fixation.

Ainsi, on dispose d'un procédé de montage d'un dispositif encastrable de connexion optique dont le montage est simplifié tout en évitant la détérioration du câble optique, des fibres optiques et des épissures.

Le procédé de montage selon l'invention est avantageusement et optionnellement complété par les caractéristiques suivantes, prises seules ou en une quelconque de leurs combinaisons techniquement possibles :
- Le procédé de montage comprend en outre au moins l'une des étapes suivantes :
- après l'étape de placement de la platine, retenir au moins une mèche de renfort du câble optique avec le dispositif de retenue,
- après l'étape de placement de la platine, maintenir le câble optique sur le boîtier de lovage par le système d'arrimage.

### DESCRIPTION DES FIGURES

D'autres caractéristiques, buts et avantages de l'invention ressortiront de la description détaillée ci-après, laquelle est purement illustrative et non limitative, et laquelle doit être lue au regard des dessins annexés, donnés à titre d'exemples non limitatifs et sur lesquels :
- la figure 1 est une vue schématique en perspective d'un dispositif encastrable de connexion optique selon un premier mode de réalisation, dans un état initial d'assemblage et de montage, en d'autres termes avant fixation dans une première configuration de fixation ;
- la figure 2 est une vue schématique en perspective du dispositif encastrable de connexion optique selon le premier mode de réalisation, dans une première configuration de fixation ;
- la figure 3 est une vue schématique en perspective d'un dispositif encastrable de connexion optique selon le premier mode de réalisation, dans un état intermédiaire de montage entre la première configuration de fixation et une deuxième configuration de fixation ;
- la figure 4 est une vue schématique de face du dispositif encastrable de connexion optique selon le premier mode de réalisation, dans la deuxième configuration de fixation ;
- la figure 5 est une vue schématique de face du dispositif encastrable de connexion optique selon le premier mode de réalisation, dans la deuxième configuration de fixation et dans un état final de montage ;
- la figure 6 est une vue schématique en perspective du dispositif encastrable de connexion optique selon le premier mode de réalisation, dans une variante de la première configuration de fixation ;
- la figure 7 est une vue schématique en perspective d'un dispositif encastrable de connexion optique selon un deuxième mode de réalisation ;
- la figure 8 est une vue schématique en perspective du dispositif encastrable de connexion optique selon un troisième mode de réalisation ;
- la figure 9 représente schématiquement les étapes d'un procédé de montage d'un dispositif encastrable de connexion optique conforme à un mode de réalisation.

Sur l'ensemble des figures, les éléments similaires sont désignés par des références identiques.

### DESCRIPTION DETAILLEE DE L'INVENTION

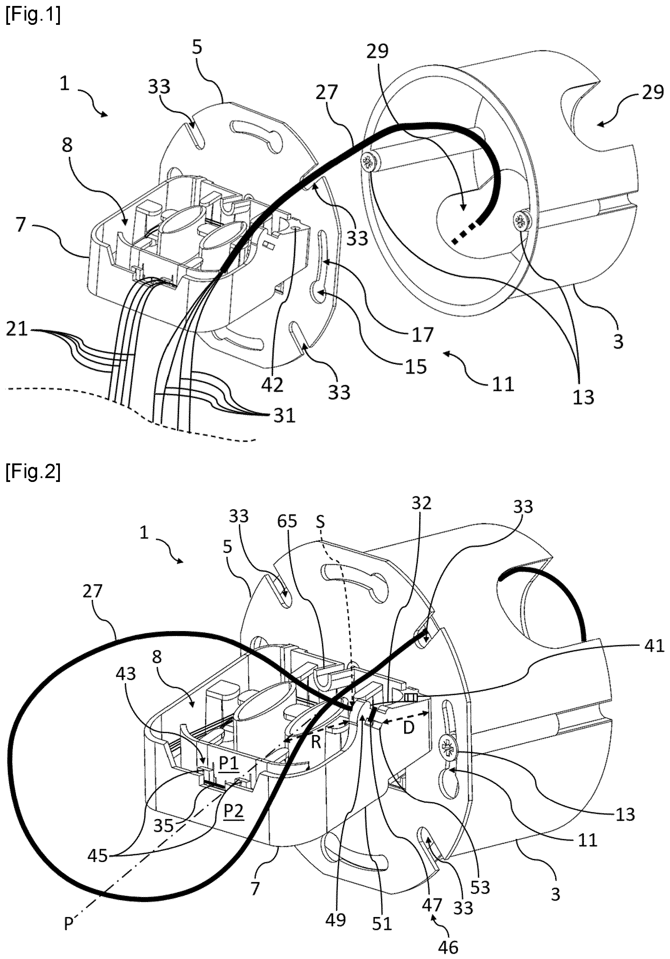

La figure 1 représente schématiquement un premier mode de réalisation d'un dispositif 1 encastrable de connexion optique.

Un tel dispositif 1 encastrable de connexion optique est propre à être monté dans un bloc encastré 3. Avantageusement, le bloc encastré 3 est propre à être encastré dans un mur ou est encastré dans un mur. De préférence, le mur est une maçonnerie pleine ou une cloison.

Avantageusement, le bloc encastré 3 présente une profondeur comprise entre 30 millimètres et 60 millimètres, de préférence égale à 40 millimètres.

Le dispositif 1 encastrable de connexion optique comprend une platine 5, un boîtier de lovage 7 et une traversée optique 9.

Avantageusement, le boîtier de lovage 7 est fixé à la platine 5. Le boîtier de lovage 7 est propre à recevoir au moins une fibre optique lovée. Ainsi, le boîtier de lovage 7 est propre à recevoir une ou plusieurs fibres optiques lovées en son sein. Le lovage au sein du boîtier de lovage 7 est classiquement réalisé au moyen de parois de guidage, de pattes de retenue et de pions de retenue, lesquels sont formés dans le boîtier de lovage 7.

Avantageusement, le boîtier de lovage 7 comprend un évidement 8 propre à recevoir au moins une fibre optique lovée, de préférence propre à recevoir une pluralité de fibres optiques lovées.

De préférence, la platine 5, le boîtier de lovage 7 et la traversée optique 9 sont fixes les uns par rapport aux autres.

Avantageusement, la platine 5 est métallique, de préférence en acier. Alternativement, la platine 5 est à base de matériau plastique, de préférence constituée d'un matériau plastique.

La platine 5 est propre est être fixée sur le bloc encastré 3 dans le mur, comme cela est par exemple représenté sur la figure 2. De préférence, la platine 5 est une plaque de support.

Avantageusement, la platine 5 comporte des trous de fixation 11 propres à la fixation de la platine 5 sur le bloc encastré 3 au moyen de vis de fixation 13.

De préférence, chaque trou de fixation 11 comprend :
- une portion de passage 15 propre au passage de la tête d'une vis de fixation 13 à travers la portion de passage 15, et
- une portion de fixation 17 propre à la fixation de la platine 5 par serrage entre la vis de fixation 13 et le bloc encastré 3.

Ainsi, les vis de fixation 13 sont vissées dans le bloc encastré 3 et maintiennent la platine 5 par serrage sur le bloc encastré 3.

Avantageusement, chaque trou de fixation 11 est un trou oblong dont une extrémité formant la portion de passage 15 présente un diamètre de passage plus important que celui de l'autre extrémité comprise dans la portion de fixation 17.

De préférence, chaque trou de fixation 11 s'étend autour d'un axe central P de la platine 5, plus préférentiellement à une même distance radiale de l'axe central P de la platine 5.

Avantageusement, les trous de fixation 11 sont régulièrement répartis autour de l'axe central P de la platine 5, de préférence tous les 90 degrés autour de l'axe central P de la platine 5.

De préférence, la platine 5 comporte exactement quatre trous de fixation 11 répartis tous les 90 degrés autour de l'axe central P de la platine 5.

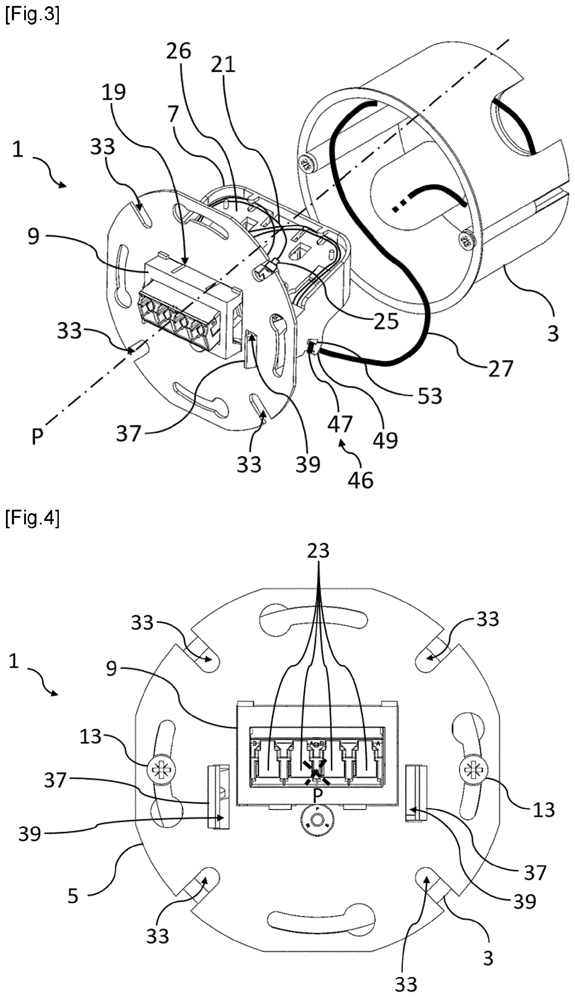

Avantageusement, comme cela est par exemple visible sur la figure 3, la traversée optique 9 traverse la platine 5.

De préférence, la platine 5 comporte une ouverture 19 à travers laquelle s'étend la traversée optique 9.

Avantageusement, de la traversée optique 9 est propre à s'étendre au moins une fibre optique de fiche 21. Comme cela est notamment représenté sur la figure 3, au moins une fibre optique de fiche 21 s'étend depuis la traversée optique 9.

Avantageusement, la traversée optique 9 est propre à être logée dans le bloc encastré 3.

Avantageusement, la traversée optique 9 comporte au moins une connexion optique. De préférence, la traversée optique 9 comprend au moins deux connexions optiques, de préférence exactement quatre connexions optiques.

De préférence, chaque connexion optique est formée, à une première extrémité opposée au boîtier de lovage 7, par une prise optique extérieure 23 pour le branchement d'une fiche optique extérieure d'un équipement, et, à une deuxième extrémité du côté du boîtier du lovage 7, par un raccord interne couplé à une fiche optique 25 de laquelle s'étend une fibre optique de fiche 21.

Avantageusement, chaque fibre optique de fiche 21 passe à travers une paroi séparatrice 26 du boîtier de lovage 7. Ainsi, le branchement du raccord interne à la fiche optique 25 est séparé de l'évidement 8, lequel est ainsi dédié au lovage.

Avantageusement, un câble optique 27 débouche dans le bloc encastré 3 depuis le mur, de préférence depuis une gaine disposée dans le mur.

De préférence, le bloc encastré 3 comprend un trou de passage 29 à travers lequel s'étend le câble optique 27. Ainsi, le câble optique 27 est issu du bloc encastré 3.

Avantageusement, le bloc encastré 3 comporte plusieurs trous de passage 29, de préférence exactement deux trous de passage 29 diamétralement opposés. Ainsi par exemple, une gaine contenant le câble optique 27 peut atteindre le bloc encastré 3 selon plusieurs orientations différentes tout en permettant au câble optique 27 sortant de la gaine de déboucher dans le bloc encastré 3.

Avantageusement, le câble optique 27 comprend au moins une fibre optique de câble 31, de préférence au moins deux fibres optiques de câble 31, plus préférentiellement exactement quatre fibres optiques de câble 31.

De préférence, le câble optique 27 comprend au moins une mèche de renfort 32.

Avantageusement, la mèche de renfort 32 ou chaque mèche de renfort 32 est à base de poly(p-phénylènetéréphtalamide), également connu en tant que PPD-T ou Kevlar (marque déposée).

Avantageusement, la platine 5 comporte au moins une encoche périphérique 33 propre à être traversée par le câble optique 27.

De préférence, la platine 5 comporte une pluralité d'encoches périphériques 33.

Avantageusement, chaque encoche périphérique 33 s'étend autour de l'axe central P de la platine 5, plus préférentiellement à une même distance radiale de l'axe central P de la platine 5.

Avantageusement, la platine 5 comporte exactement quatre encoches périphériques 33.

Avantageusement, les encoches périphériques 33 sont régulièrement réparties autour de l'axe central P de la platine 5, de préférence tous les 90 degrés autour de l'axe central P de la platine 5.

De préférence, la platine 5 comporte exactement quatre encoches périphériques 33 réparties tous les 90 degrés autour de l'axe central P de la platine 5.

Avantageusement, les dimensions de la platine 5 sont telles que la platine est inscrite dans un carré de côté compris entre 60 millimètres et 80 millimètres, de préférence égal à 70 millimètres.

De préférence, la ou chaque encoche périphérique 33 présente une largeur entre ses bords supérieure ou égale à 4 millimètres, préférentiellement comprise entre 4 millimètres et 6 millimètres, plus préférentiellement égale à 4 millimètres. Ainsi, une telle largeur permet de faire facilement passer un câble optique 27 d'un diamètre inférieur ou égal à 3 millimètres à travers l'encoche périphérique 33.

Avantageusement, la profondeur de la ou chaque encoche périphérique 33 est telle que dans la première configuration de fixation, le câble optique 27 est libre de passer à travers l'encoche périphérique 33. En d'autres termes, dans la première configuration de fixation, lorsque la platine 5 est fixée sur le bloc encastré 3, le câble optique 27 n'est pas comprimé dans l'encoche périphérique 33 entre la platine 5 et le bloc encastré 3. Ainsi, on évite de détériorer le câble optique 27.

De préférence, la profondeur de la ou chaque encoche périphérique 33 est telle que dans la première configuration de fixation, le passage ménagé dans l'encoche périphérique entre le bloc encastré 3 et la platine 5 est d'une dimension au moins égale à la largeur de l'encoche périphérique 33.

Avantageusement, au moins une ou chaque fibre optique de fiche 25 est propre à être couplée par une épissure 35 avec une fibre optique de câble 31 du câble optique 27 issu du bloc encastré 3 et à être lovée dans le boîtier de lovage 7. Ainsi, comme représenté sur la figure 3, chaque fibre optique de fiche 25 est couplée par une épissure 35 avec une fibre optique de câble 31 du câble optique 27 issu du bloc encastré 3 et est lovée dans le boîtier de lovage 7.

De préférence, chaque fibre optique de fiche 25 est reliée avec une fibre optique de câble 31 par une épissure 35. Avantageusement, l'épissure 35 est mécanique ou soudée par fusion.

Avantageusement, chaque fibre optique de fiche 25 est à base de verre.

Avantageusement, chaque fibre optique de câble 31 est à base de verre.

Dans une première configuration de fixation, la platine 5 est propre à être fixée sur le bloc encastré 3. Ainsi, la figure 2 représente la platine 5 fixée directement sur le bloc encastré 3, la platine 5 étant fixée au bloc encastré 3 par le biais des vis de fixation 13.

Avantageusement, dans la première configuration de fixation, le boîtier de lovage 7 est opposé au bloc encastré 3 par rapport à la platine 5 et une encoche périphérique 33 est traversée par le câble optique 27. En d'autres termes, une seule encoche périphérique 33 est traversée par le câble optique 27. Dans le cas où la platine 5 comporte plusieurs encoches périphériques 33, hormis cette unique encoche périphérique 33 traversée par le câble optique 27, les encoches périphériques 33 restantes ne sont pas traversées par le câble optique 27.

De préférence, dans la première configuration de fixation, le boîtier de lovage 7 fait saillie hors du bloc encastré 3. En d'autres termes, dans la première configuration de fixation, le boîtier de lovage 7 est disposé hors du bloc encastré 3.

Dans une deuxième configuration de fixation, la platine 5 est également propre à être fixée sur le bloc encastré 3. Ainsi, la figure 4 représente la platine 5 fixée directement sur le bloc encastré 3, la platine 5 étant fixée au bloc encastré 3 par le biais des vis de fixation 13. Dans la deuxième configuration de fixation, la platine 5 est retournée par rapport à la première configuration de fixation.

Ainsi, le dispositif 1 encastrable de connexion optique est propre à être fixé dans deux configurations de fixations successives, à savoir, la première configuration de fixation et la deuxième configuration de fixation.

Avantageusement, dans la deuxième configuration de fixation, le boîtier de lovage 7 est logé dans le bloc encastré 3 et l'encoche périphérique 33 est libre de câble optique. Dans le cas où la platine 5 comporte plusieurs encoches périphériques 33, chaque encoche périphérique 33 est libre de câble optique 27. En d'autres termes, la ou les encoches périphériques 33 ne sont pas traversées par le câble optique 27.

De préférence, dans la deuxième configuration de fixation, la ou chaque encoche périphérique 33 est libre, et n'est ainsi traversée par aucune autre pièce. En d'autres termes, dans la deuxième configuration de fixation, la ou chaque encoche périphérique 33 est exempte de câble optique 27.

La platine 5 est propre à être successivement fixée sur le bloc encastré 3 dans la première configuration de fixation puis dans la deuxième configuration de fixation dans laquelle la platine 5 est retournée par rapport à la première configuration de fixation.

Avantageusement, la platine 5 est propre à être successivement fixée sur le bloc encastré 3 dans une première configuration de fixation puis dans une deuxième configuration de fixation dans laquelle la platine 5 est retournée par rapport à la première configuration de fixation.

De préférence, la platine 5 est propre à être successivement fixée directement sur le bloc encastré 3 dans la première configuration de fixation, comme cela est représenté sur la figure 2, puis dans la deuxième configuration de fixation, comme cela est représenté sur la figure 4.

Avantageusement, dans la première configuration de fixation, la traversée optique 9 est logée dans le bloc encastré 3.

Avantageusement, le boîtier de lovage 7 est encliqueté sur la platine 5. De préférence, comme représenté sur la figure 3, le boîtier de lovage 7 comprend des pattes 37 encliquetées dans des trous 39 correspondants ménagés dans la platine 5.

De préférence, le boîtier de lovage 7 est monolithique.

Avantageusement, le boîtier de lovage 7 est à base de matériau plastique, de préférence constitué d'un matériau plastique.

De préférence, le boîtier de lovage 7 présente une profondeur selon l'axe central P de la platine 5 inférieure ou égale à la profondeur du bloc encastré 3.

De préférence, le boîtier de lovage 7 présente une profondeur selon l'axe central P de la platine 5 comprise entre 30 millimètres et 60 millimètres, de préférence égale à 35 millimètres.

Avantageusement, le dispositif 1 encastrable de connexion optique comporte un dispositif de retenue 41 propre à la fixation d'au moins une mèche de renfort 32 du câble optique 27 au boîtier de lovage 7.

De préférence, le dispositif de retenue 41 est une vis de retenue 41.

Avantageusement, la vis de retenue 41 est vissée dans un trou 42 du boîtier de lovage 7.

Avantageusement, le boîtier de lovage 7 comporte au moins un logement 43 propre à recevoir au moins une épissure 35, comme représenté sur la figure 2.

De préférence, le logement 43 ou chaque logement 43 est formé entre deux parois parallèles P1-P2 du boîtier de lovage 7.

Avantageusement, chaque épissure 35 est logée dans un logement 43.

De préférence, le logement 43 ou chaque logement 43 est formé par au moins une fourchette 45 propre à recevoir au moins une épissure 35. Ainsi, le boîtier de lovage 7 comporte au moins une fourchette 45 recevant au moins une épissure 35.

Avantageusement, le boîtier de lovage 7 comporte une pluralité de fourchettes 45, de préférence exactement deux fourchettes 45.

De préférence, la ou chaque fourchette 45 est propre à recevoir une pluralité d'épissures 35. Comme représenté sur la figure 2, chaque fourchette 45 reçoit une pluralité d'épissures 35, dont une seule est visible sur la figure 2.

Avantageusement, le ou chaque logement 43 est formé par deux fourchettes 45 délimitant entre elles un passage configuré pour permettre l'extraction d'au moins une épissure 35 par un outil.

De préférence, les fourchettes 45 se situent du côté du boîtier de lovage 7 le plus éloigné de la platine 5.

Avantageusement, le dispositif 1 encastrable de connexion optique comporte un système d'arrimage 46. Le système d'arrimage 46 comporte un dispositif de serrage 47. Le dispositif de serrage 47 est propre à maintenir le câble optique 27 sur le boîtier de lovage 7 à la fois dans la première configuration de fixation et dans la deuxième configuration de fixation. En d'autres termes, le câble optique 27 reste maintenu par le dispositif de serrage 47 dans la première configuration de fixation, puis entre la première configuration de fixation et la deuxième configuration de fixation, puis dans la deuxième configuration de fixation.

De préférence, le dispositif de serrage 47 est propre à maintenir localement le câble optique 27 sur le boîtier de lovage 7 de telle sorte que le câble optique 27 est incliné par rapport à l'axe central P de la platine 5 avec un angle compris entre 15 degrés et 75 degrés, préférentiellement entre 30 degrés et 60 degrés.

De préférence, le système d'arrimage 46 est formé par une surface d'appui S du boîtier de lovage 7 et le dispositif de serrage 47. Le dispositif de serrage 47 est ainsi propre à maintenir le câble optique 27 contre la surface d'appui S à la fois dans la première configuration de fixation et dans la deuxième configuration de fixation.

Avantageusement, la surface d'appui S est une surface d'un ergot 49 du boîtier de lovage 7.

De préférence, l'ergot 49 est formé par le prolongement d'une paroi périphérique 51 délimitant l'évidement 8 du boîtier de lovage 7.

Avantageusement, l'ergot 49 est formé sur une portion de la paroi périphérique 51 orthogonale à la platine 5.

De préférence, le dispositif de serrage 47 est un collier de serrage 47. Le collier de serrage 47 passe autour du câble optique 27 et retient localement le câble optique 27 sur la surface d'appui S en étant enroulé sur l'ergot 49 à travers un trou de passage 53 réalisé sur l'ergot 49. Le trou de passage 53 forme ainsi un passant pour le collier de serrage 47.

Avantageusement, le collier de serrage 47 est à base de matériau plastique.

Avantageusement, la surface d'appui S est plane. De préférence, la surface d'appui S est orientée vers au moins une encoche périphérique 33. En d'autres termes, un plan passant par la surface d'appui S est sécant avec au moins une encoche périphérique 33.

Avantageusement, le système d'arrimage 46 est distant de la platine 5 d'une distance minimale prédéterminée D.

De préférence, le trou de passage est distant de la platine 5 de la distance minimale prédéterminée D.

Avantageusement, la surface d'appui S est distante de la platine 5 de la distance minimale prédéterminée D.

De préférence, la distance minimale prédéterminée D est supérieure au rayon de courbure minimal admissible du câble optique 27.

Avantageusement, la distance minimale prédéterminée D est comprise entre 15 millimètres et 30 millimètres, de préférence égale à 19 millimètres.

Avantageusement, la surface d'appui S est distante de l'axe central P de la platine 5 d'une distance radiale minimale prédéterminée R.

De préférence, la distance radiale minimale prédéterminée R est supérieure au rayon de courbure minimal admissible du câble optique 27.

Avantageusement, la distance radiale minimale prédéterminée R est comprise entre 15 millimètres et 35 millimètres, de préférence comprise entre 20 millimètres et 30 millimètres, plus préférentiellement égale à 24 millimètres.

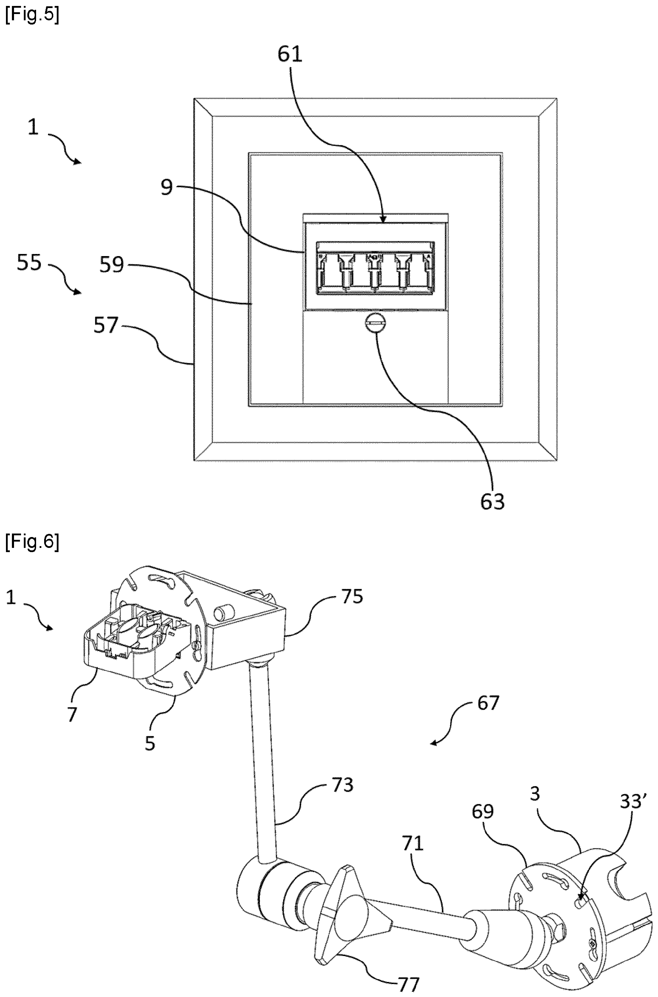

Avantageusement, comme cela est représenté sur la figure 5, le dispositif 1 encastrable de connexion optique comprend un dispositif d'enjolivement 55.

De préférence, le dispositif d'enjolivement 55 est formé par un cadre d'enjolivement 57 et une plaque d'enjolivement 59, laquelle comporte une ouverture 61 à travers laquelle s'étend la traversée optique 9.

Avantageusement, la plaque d'enjolivement 59 est fixée à la platine 5, de préférence par une vis de fixation 63 engagée dans la platine 5 à travers un trou de la plaque d'enjolivement 59.

De préférence, le boîtier de lovage 7 comporte une goulotte de protection 65 disposée entre la vis de fixation 63 et l'évidement 8, afin de protéger les fibres optiques contre une détérioration lors du vissage de la vis de fixation 63.

De préférence, le cadre d'enjolivement 57 est propre à être maintenu par serrage entre la plaque d'enjolivement 59 et le mur.

Ainsi, le dispositif d'enjolivement 55 est fixé sur la platine 5.

La figure 6 représente une variante de montage du dispositif 1 encastrable de connexion optique, plus précisément selon une variante de la première configuration de fixation de la platine 5.

Selon cette variante, la platine 5 est propre à être successivement fixée dans la première configuration de fixation, sur un manchon intermédiaire 67 lui-même fixé sur le bloc encastré 3, puis dans la deuxième configuration de fixation, directement sur le bloc encastré 3.

Ainsi, selon cette variante, les vis de fixation 13 sont vissées dans manchon intermédiaire 67 et maintiennent la platine 5 par serrage sur le manchon intermédiaire 67.

Avantageusement, le manchon intermédiaire 67 est un bras articulé.

De préférence, le manchon intermédiaire 67 comporte une platine de fixation 69 sur le bloc encastré 3, une première barre 71 supportée par la platine de fixation 69, une deuxième barre 73 supportée par la première barre 71, et un bloc de fixation 75 supporté par la deuxième barre 73. Comme la platine 5, la platine de fixation 69 comporte au moins une encoche périphérique 33', similaire à l'encoche périphérique 33 de la platine 5, permettant ainsi le passage du câble optique 27 à travers l'encoche périphérique 33' dans la première configuration de fixation.

La première barre 71 est montée sur la platine de fixation 69 via une première rotule, le maintien en position de la première barre 71 sur la platine de fixation 69 étant assuré par friction. Ainsi, en l'absence d'une force minimale de déplacement exercée par l'utilisateur, la première barre 71 et la platine de fixation 69 restent fixes l'une par rapport à l'autre.

La deuxième barre 73 est montée pivotante sur la première barre 71, le maintien en position étant également assuré par friction. Une poignée de serrage 77 permet de régler la force de serrage assurant le maintien en position relatif de la deuxième barre 73 et de la première barre 71.

Le bloc de fixation 75 est monté sur la deuxième barre 73 via une deuxième rotule, le maintien en position du bloc de fixation 75 sur la deuxième barre 73 étant assuré par friction. Ainsi, en l'absence d'une force minimale de déplacement exercée par l'utilisateur, le bloc de fixation 75 et la deuxième barre 73 restent fixes l'un par rapport à l'autre.

Le manchon intermédiaire 67 n'étant pas utilisé dans la deuxième configuration de fixation, il est ainsi réutilisable et permet le montage ultérieur d'autres dispositifs 1 encastrables de connexion optique.

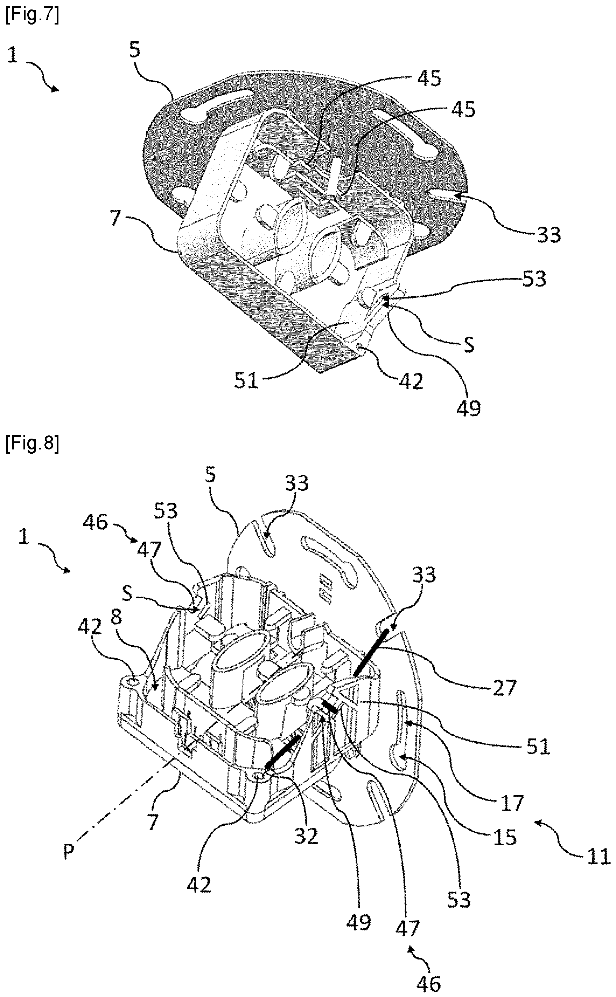

La figure 7 représente un dispositif 1 encastrable de connexion optique selon un deuxième mode de réalisation.

Le dispositif 1 encastrable de connexion optique selon ce deuxième mode de réalisation se distingue du dispositif 1 encastrable de connexion optique selon le premier mode de réalisation principalement en ce que la platine 5 comporte exactement une encoche périphérique 33.

Avantageusement, dans ce deuxième mode de réalisation, la surface d'appui S est orientée vers l'unique encoche périphérique 33.

De préférence, un plan comprenant la surface d'appui S est sécant avec l'unique encoche périphérique 33. En d'autres termes, la surface d'appui S s'étend en direction de l'encoche périphérique 33.

Dans ce deuxième mode de réalisation, le boîtier de lovage 7 est dépourvu de goulotte de protection.

Par ailleurs, les fourchettes 45 se situent du côté du boîtier de lovage 7 le plus proche de la platine 5.

La figure 8 représente un dispositif 1 encastrable de connexion optique selon un troisième mode de réalisation.

Le dispositif 1 encastrable de connexion optique selon ce troisième mode de réalisation se distingue du dispositif 1 encastrable de connexion optique selon le premier mode de réalisation principalement en ce que le dispositif 1 encastrable de connexion optique comporte deux systèmes d'arrimage 46, lesquels sont de préférence disposés de part et d'autre du boîtier de lovage 7, plus préférentiellement disposés symétriquement de part et d'autre du boîtier de lovage 7. Avantageusement, les deux systèmes d'arrimage 46 sont symétriques l'un de l'autre par rapport à un plan comprenant l'axe central P de la platine 5.

Avantageusement, selon ce troisième mode de réalisation, le dispositif 1 encastrable de connexion optique comporte deux trous 42, lesquels sont de préférence disposés de part et d'autre du boîtier de lovage 7, plus préférentiellement disposés symétriquement de part et d'autre du boîtier de lovage 7. Ainsi, la vis de retenue 41 est vissée dans l'un des deux trous 42 du boîtier de lovage 7, en fonction du côté choisi par l'installateur. Avantageusement, les deux trous 42 sont symétriques l'un de l'autre par rapport à un plan comprenant l'axe central P de la platine 5.

Avantageusement, selon ce troisième mode de réalisation, les trous 42 sont disposés sur l'extrémité du boîtier de lovage 7 opposée à la platine 5.

Avantageusement, selon ce troisième mode de réalisation, chaque trou 42 du boîtier de lovage 7 est propre à réceptionner le dispositif de retenue 41, de préférence une vis de retenue 41, pour la fixation d'au moins une mèche de renfort 32 du câble optique 27.

Avantageusement, selon ce troisième mode de réalisation, l'orientation du câble optique 27 - ici représenté uniquement partiellement, la ou les fibres optiques de câble 31 issues de ce câble optique 27 n'étant pas représentées - est inversée par rapport au dispositif 1 encastrable de connexion optique selon le premier mode de réalisation. En d'autres termes, une fois fixé par le système d'arrimage 46, le câble optique 27 provenant du bloc encastré 1, et sortant de l'encoche périphérique 33 dans la première configuration de fixation, est orienté dans une direction d'éloignement de la platine 5, contrairement au premier mode de réalisation dans lequel, une fois fixé par le système d'arrimage 46, le câble optique 27 provenant du bloc encastré 1, et sortant de l'encoche périphérique 33 dans la première configuration de fixation, est orienté dans une direction de rapprochement de la platine 5, comme cela est représenté sur la figure 2.

Toutefois, dans le troisième mode de réalisation, hormis cette orientation différente, chaque système d'arrimage 46 comporte les mêmes caractéristiques que le système d'arrimage 46 précédemment décrit dans le premier mode de réalisation. Ainsi notamment, chaque système d'arrimage 46 comporte un dispositif de serrage 47. Le dispositif de serrage 47 est propre à maintenir le câble optique 27 sur le boîtier de lovage 7 à la fois dans la première configuration de fixation et dans la deuxième configuration de fixation. En d'autres termes, le câble optique 27 reste maintenu par le dispositif de serrage 47 dans la première configuration de fixation, puis entre la première configuration de fixation et la deuxième configuration de fixation, puis dans la deuxième configuration de fixation. De préférence, le dispositif de serrage 47 est propre à maintenir localement le câble optique 27 sur le boîtier de lovage 7 de telle sorte que le câble optique 27 est incliné par rapport à l'axe central P de la platine 5 avec un angle compris entre 15 degrés et 75 degrés, préférentiellement entre 30 degrés et 60 degrés. De préférence, le système d'arrimage 46 est formé par une surface d'appui S du boîtier de lovage 7 et le dispositif de serrage 47. Le dispositif de serrage 47 est ainsi propre à maintenir le câble optique 27 contre la surface d'appui S à la fois dans la première configuration de fixation et dans la deuxième configuration de fixation. Avantageusement, la surface d'appui S est une surface d'un ergot 49 - en d'autres termes, d'une excroissance - du boîtier de lovage 7. De préférence, l'ergot 49 est formé par le prolongement d'une paroi périphérique 51 délimitant l'évidement 8 du boîtier de lovage 7. Avantageusement, l'ergot 49 est formé sur une portion de la paroi périphérique 51 orthogonale à la platine 5. De préférence, le dispositif de serrage 47 est un collier de serrage 47. Le collier de serrage 47 passe autour du câble optique 27 et retient localement le câble optique 27 sur la surface d'appui S en étant enroulé sur l'ergot 49 à travers un trou de passage 53 réalisé sur l'ergot 49. Le trou de passage 53 forme ainsi un passant pour le collier de serrage 47. Avantageusement, le collier de serrage 47 est à base de matériau plastique. Avantageusement, la surface d'appui S est plane. De préférence, la surface d'appui S est orientée vers au moins une encoche périphérique 33. En d'autres termes, un plan passant par la surface d'appui S est sécant avec au moins une encoche périphérique 33.

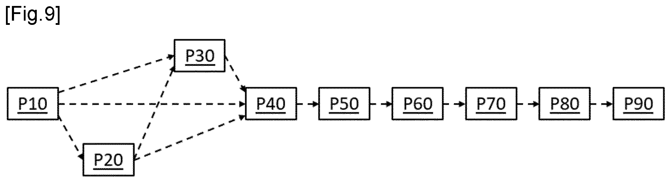

La figure 9 représente les étapes principales d'un procédé de montage d'un dispositif 1 encastrable de connexion optique tel que précédemment défini dans un bloc encastré dans un mur.

Un tel procédé de montage comporte les étapes suivantes :
- P10 placer la platine 5 de telle sorte que le boîtier de lovage 7 soit opposé au bloc encastré 3 et placer le câble optique 27 dans une encoche périphérique 33, par exemple comme représenté sur la figure 1,
- P40 fixer la platine dans la première configuration de fixation, directement sur le bloc encastré ou sur un manchon intermédiaire lui-même fixé sur le bloc encastré,
- P50 épissurer chaque fibre optique de fiche 21 avec une fibre optique de câble 31 pour former une épissure 35,
- P60 loger chaque épissure 35 dans le boîtier de lovage 7,
- P70 lover chaque fibre optique de fiche 21 et chaque fibre optique de câble 31 dans le boîtier de lovage 7, par exemple comme représenté sur la figure 2,
- P80 démonter la platine 5 depuis la première configuration de fixation, retirer le câble optique 27 de l'encoche périphérique 33, retourner la platine 5 par exemple comme représenté sur la figure 3, lover le câble optique 27 dans le bloc encastré 3, et fixer la platine 5 sur le bloc encastré 3 dans la deuxième configuration de fixation, par exemple comme représenté par exemple sur la figure 4.

Avantageusement, le procédé de montage comprend en outre au moins l'une des étapes suivantes :
- après l'étape P10 de placement de la platine 5, P20 retenir au moins une mèche de renfort 32 du câble optique 27 avec le dispositif de retenue 41,
- après l'étape P10 de placement de la platine 5, P30 maintenir le câble optique 27 sur le boîtier de lovage 7 par le système d'arrimage 46.

De préférence, le procédé de montage comprend en outre l'étape suivante :
- après l'étape P80 de fixation de la platine 5 sur le bloc encastré 3 dans la deuxième configuration de fixation, P90 fixer le dispositif d'enjolivement 55 sur la platine 5, comme représenté par exemple sur la figure 5.

L'invention n'est pas limitée aux modes et variantes de réalisation présentés et d'autres modes de réalisation apparaîtront clairement à l'homme du métier. Il est notamment possible de combiner les modes et variantes de réalisation entre eux.

## Revendications

1. Dispositif (1) encastrable de connexion optique comprenant :
- une platine (5) propre à être fixée sur un bloc encastré (3) dans un mur,
- un boîtier de lovage (7), le boîtier de lovage (7) étant fixé à la platine (5) et propre à recevoir au moins une fibre optique lovée, et
- une traversée optique (9) traversant la platine (5) et de laquelle est propre à s'étendre au moins une fibre optique de fiche (21) propre à être couplée par une épissure (35) avec une fibre optique de câble (31) d'un câble optique (27) issu du bloc encastré (3) et à être lovée dans le boîtier de lovage (7),
**caractérisé en ce que** :
la platine (5) est propre à être successivement fixée sur le bloc encastré (3) dans une première configuration de fixation puis dans une deuxième configuration de fixation dans laquelle la platine (5) est retournée par rapport à la première configuration de fixation, la platine (5) comportant au moins une encoche périphérique (33) propre à être traversée par le câble optique (27), de telle sorte que :
- dans la première configuration de fixation, le boîtier de lovage (7) est opposé au bloc encastré (3) par rapport à la platine (5) et une encoche périphérique (33) est traversée par le câble optique (27) , et
- dans la deuxième configuration de fixation, le boîtier de lovage (7) est logé dans le bloc encastré (3) et l'encoche périphérique (33) est libre de câble optique (27).

2. Dispositif (1) encastrable de connexion optique selon la revendication 1, dans laquelle la traversée optique (9) comporte au moins une connexion optique, chaque connexion optique étant formée, à une première extrémité opposée au boîtier de lovage (7), par une prise optique extérieure pour le branchement d'une fiche optique extérieure d'un équipement, et, à une deuxième extrémité du côté du boîtier du lovage (7), par un raccord interne couplé à une fiche optique (25) de laquelle s'étend une fibre optique de fiche (21).

3. Dispositif (1) encastrable de connexion optique selon la revendication 1 ou 2, lequel comporte un système d'arrimage (46), le système d'arrimage (46) comportant un dispositif de serrage (47), le dispositif de serrage (47) étant propre à maintenir le câble optique (27) sur le boîtier de lovage (7) à la fois dans la première configuration de fixation et dans la deuxième configuration de fixation.

4. Dispositif (1) encastrable de connexion optique selon la revendication 3, dans lequel le système d'arrimage (46) est formé par le dispositif de serrage (47) et par une surface d'appui (S) du boîtier de lovage (7), le dispositif de serrage (47) étant propre à maintenir le câble optique (27) contre la surface d'appui (S) à la fois dans la première configuration de fixation et dans la deuxième configuration de fixation.

5. Dispositif (1) encastrable de connexion optique selon la revendication 3 ou 4, dans lequel le système d'arrimage (46) est distant de la platine (5) d'une distance minimale prédéterminée (D).

6. Dispositif (1) encastrable de connexion optique selon l'une quelconque des revendications 3 à 5, lequel comporte deux systèmes d'arrimage (46), lesquels sont disposés symétriquement de part et d'autre du boîtier de lovage (7).

7. Dispositif (1) encastrable de connexion optique selon l'une quelconque des revendications 1 à 6, dans lequel la platine (5) comporte des trous de fixation (11) propres à la fixation de la platine (5) sur le bloc encastré (3) au moyen de vis de fixation (13), chaque trou de fixation (11) comprenant :
- une portion de passage (15) propre au passage de la tête d'une vis de fixation (13) à travers la portion de passage (15), et
- une portion de fixation (17) propre à la fixation de la platine (5) par serrage entre la vis de fixation (13) et le bloc encastré (3).

8. Dispositif (1) encastrable de connexion optique selon l'une quelconque des revendications 1 à 7, lequel comporte un dispositif de retenue (41) propre à la fixation d'au moins une mèche de renfort (32) du câble optique (27) au boîtier de lovage (7).

9. Dispositif (1) encastrable de connexion optique selon l'une quelconque des revendications 1 à 8, dans lequel le boîtier de lovage (7) comporte au moins un logement (43) propre à recevoir au moins une épissure (35).

10. Dispositif (1) encastrable de connexion optique selon la revendication 9, dans lequel le logement (43) ou chaque logement (43) est formé par deux fourchettes (45) délimitant entre elles un passage propre à permettre l'extraction d'au moins une épissure (35) par un outil.

11. Dispositif (1) encastrable de connexion optique selon l'une quelconque des revendications 1 à 10, dans lequel la traversée optique (9) est propre à être logée dans le bloc encastré (3).

12. Procédé de montage d'un dispositif (1) encastrable de connexion optique selon l'une quelconque des revendications 1 à 11 dans un bloc encastré (3) dans un mur, comprenant les étapes suivantes :
- P10 placer la platine (5) de telle sorte que le boîtier de lovage (7) soit opposé au bloc encastré (3) et placer le câble optique (27) dans une encoche périphérique (33),
- P40 fixer la platine (5) dans la première configuration de fixation, directement sur le bloc encastré (3) ou sur un manchon intermédiaire (67) lui-même fixé sur le bloc encastré (3),
- P50 épissurer chaque fibre optique de fiche (21) avec une fibre optique de câble (31) pour former une épissure (35),
- P60 loger chaque épissure (35) dans le boîtier de lovage (7),
- P70 lover chaque fibre optique de fiche (21) et chaque fibre optique de câble (31) dans le boîtier de lovage (7),
- P80 démonter la platine (5) depuis la première configuration de fixation, retirer le câble optique (27) de l'encoche périphérique (33), retourner la platine (5), lover le câble optique (27) dans le bloc encastré (3), et fixer la platine (5) sur le bloc encastré (3) dans la deuxième configuration de fixation.
